Europäisches Patentamt

European Patent Office

Office européen des brevets

(11) Publication number: **0 331 353**
**A2**

## EUROPEAN PATENT APPLICATION

(21) Application number: **89301778.0**

(22) Date of filing: **23.02.89**

(51) Int. Cl.⁴: **G01S 11/00 , G01S 5/16 , G01P 13/00**

(30) Priority: **26.02.88 GB 8804561**

(43) Date of publication of application:
**06.09.89 Bulletin 89/36**

(84) Designated Contracting States:
**AT BE CH DE ES FR GB GR IT LI LU NL SE**

(71) Applicant: **Allan, James Donald Campbell**
**6 Churchfields Drive Steeple**
**Bumpstead Haver Hill Suffolk, CB9 7EU(GB)**

(72) Inventor: **Allan, James Donald Campbell**
**6 Churchfields Drive Steeple**
**Bumpstead Haver Hill Suffolk, CB9 7EU(GB)**

(74) Representative: **Jukes, Herbert Lewis**
**Swann, Elt & Company 31 Beaumont Street**
**Oxford OX1 2NP(GB)**

(54) **Detecting change in location of a moving source of electromagnetic radiation.**

(57) Electromagnetic radiation from a transmitter (1) is processed to give at least one interference pattern by utilising receiver means (3,4) for providing diffraction patterns that interfere to produce at least one interference pattern whose motion is detected by utilising detector means (5). The apparatus thereby constituted may be embodied for any suitable purpose.

Figure 1

EP 0 331 353 A2

# DETECTING CHANGE IN LOCATION OF A MOVING SOURCE OF ELECTROMAGNETIC RADIATION

It has been found in accordance with the present invention that motion of at least one interference pattern produced by wavefront division can be used to detect change in location of at least one source of radiation, optionally supported by at least one substrate. The detection can enable coordinate(s) to be obtained which may be used to determine information about the location of said source, e.g. the orientation of a source of plane waves in 3-D space or the location of a point source in 3-D space.

The term "coordinate" means in this specification a real number that identifies a "locus" of the source, this locus being a surface. More than one coordinate of a source may be used together to determine the location of the source. The source simultaneously lies on all the loci identified by the coordinates.

A first aspect of the present invention provides a method of detecting change in location of at least one portion of a transmitter of radiation, said method comprising: processing said radiation so as to give at least one interference pattern; and detecting motion of said at least one interference pattern, said detecting being at at least one surface (which is optionally at least one image surface of at least one focusing means), and for enabling motion of said at least one interference pattern to determine at least one coordinate and/or change in at least one coordinate of said transmitter.

A second aspect of the present invention provides apparatus (herein called "an interferometer") for detecting change in location of at least one portion of at least one transmitter of radiation, said apparatus comprising: at least one radiation processor means for processing said radiation so as to give at least one interference pattern; and at least one detector means for detecting motion of said at least one interference pattern, said detecting being at at least one surface (which is optionally at least one image surface of at least one focusing means), and for enabling motion of said at least one interference pattern to determine at least one coordinate and/or change in at least one coordinate of said transmitter. The apparatus may include the transmitter of radiation.

A third aspect of the invention provides a robotic apparatus, device or system, comprising at least one said apparatus of the second aspect of the invention.

Further aspects of the invention appear from the disclosures given below. The present invention may be embodied in any suitable manner.

The transmitter of radiation may irradiate any suitable wavefronts, e.g. cylindrical wavefronts, plane wavefronts, or spherical wavefronts. The transmitter may comprise at least one source of radiation for constituting suitable wavefronts. The transmitter may comprise any suitable means for aiding and/or enabling that constitution. At least one said source of radiation may be at least one precursor to suitable wavefronts. One example of a source of radiation is a continuous wave laser, e.g. a semiconductor laser of sufficiently narrow waveband and of suitable coherence length. Any suitable accessory may be provided (separate from or part of) the transmitter means, e.g. filter means, objective lens means, spatial filter means (e.g. a pinhole), and collimating lens means. Any said accessory can be movable or static.

The radiation processor means may comprise at least one processor diffraction grating for enabling diffraction patterns for constituting said at least one interference pattern; or comprise at least one screen means comprising apertures for enabling diffraction patterns for constituting said at least one interference pattern. Those apertures may be: air slits made by photoetching a suitable sheet material e.g. sheet copper; or be slits provided by a photoetched layer of material (e.g. chromium or silver) on a substrate transparent to the radiation. The slits may be substantially parallel to each other. The radiation processor means may comprise any suitable accessory for dealing with radiation to be inputed to or outputted from the processor diffraction grating(s) or said at least one processor screen means. For example, the radiation processor means may comprise at least one reflector means and/or at least one refractor means for dealing with that radiation, for instance for aiding and/or enabling by reflection and/or refraction said diffraction patterns to be at least partly superimposed at at least one said image surface. Any reflector means or any refractor means may have surfaces of planar, cylindrical, spherical or more complex shape.

The radiation processor means may comprise at least one amplitude beam splitter means for beam splitting said outputted radiation from said at least one processor diffraction grating or from said at least one processor screen means. Examples of amplitude beam splitter means are: cube, pellicle or plate beam splitters.

Downstream of the at least one processor diffraction grating or of the at least one processor screen means, said radiation processor means may comprise at least one modulating diffraction grating for modulating the amplitude of outputted radiation from said processor diffraction grating(s) or from said at least one processor screen means or from said at least one beam splitter means. But, it should be noted that instead of being comprised by said radiation processor means, said at least one modulating diffraction grating may be comprised by said detector means. The output of said modulating diffraction grating varies in a cyclical manner (e.g. a sinusoidal modulation) as an interference pattern moves on that grating, when the moving is in a direction e.g. normal to the grating's lines. The line spacing of a said modulating diffraction grating may correspond to the line spacing of a said interference pattern. Said modulating diffraction grating may be at or in a focal surface of optional lens means (which is one example of said refraction means of said radiation processor means). Said modulating diffraction grating may be an amplitude transmission grating so as to enable changes in intensity of radiation to be measured once it has passed through that grating. The power transmitted through a said modulating amplitude transmission diffraction grating may be modulated in a cyclical manner (e.g. a sinusoidal modulation) as said interference pattern moves on that grating. Another kind of modulating diffraction grating is a reflection diffraction grating, which may be used in the present invention so as to enable measurement of changes in amplitude of radiation as it reflects from that grating. Preferably the fringes of said at least one interference pattern are substantially parallel to the lines of said at least one modulating diffraction grating. There may be two said modulating diffraction gratings when quadrature of radiation is to be provided. (see e.g. later below with reference to the accompanying drawings).

Said detector means may be movable or static. The detector means may comprise at least one sensor for sensing the position of at least one said interference pattern so as to provide at least one output signal processable by signal processor means optionally part of the apparatus of the second aspect of the invention, as mentioned later below. At least one said output signal may be electrical (e.g. electronic). The number of said sensors may be proportional to the number of coordinate(s) to be measured of said transmitter. A plurality of said sensors may be in a predetermined disposition relative to each other For example, when there are two said interference patterns there may be two suitably disposed sensors (e.g. both statically disposed), e.g. corresponding to quadrature of radiation. Said at least one output signal may be at least one analogue signal or at least one digital signal, e.g. an analogue signal approximating to a cyclical wave, for instance a sine wave. Both said at least one modulating diffraction grating and the corresponding at least one said sensor may be replaced by at least one sensor comprising or constituted by at least one camera or other recording means, e.g. for providing a permanent or temporary record of motion or a static state of at least one said interference pattern. Said detector means may comprise at least one photosensitive device, e.g. a pixel device, (for instance comprising a CCD device). Said detector means may comprise photoelectric cell(s), photomultiplier(s), or other devices suitable for use in detection of radiation. Said detector means may comprise optical fibre means for transmitting radiation from at least one said interference pattern to at least one said sensor.

At least one signal processor means may process said at least one output signal in any suitable manner, e.g. digitise an analogue output signal. The signal processor means may be adapted to operate according to any suitable software. The signal processor means may comprise at least one integrated circuit (e.g. RAM or ROM) or microcomputer means. At least a portion of the software may be provided as part of optional permanent memory of said signal processor means. The signal processor means may provide at least one output identifying 1,2 or 3 coordinates of said transmitter means when the apparatus of the second aspect of the invention is embodied suitably.

Absolute or relative coordinates may be obtained, according as to the detector means employed. With said at least one sensor comprising, e.g. a suitably calibrated video camera tube or CCD array, at least one absolute coordinate of the transmitter is obtained. For example, when said processor screen means comprises two said slits and only one said sensor is used, one hyperboloidal coordinate of a point source of radiation may be determined. If there is a plurality of said interferometers (e.g. 3 said interferometers) suitably disposed, each with one said sensor, then a corresponding plural number (e.g. 3) of hyperboloidal coordinates of a said transmitter may be determined and processed by said signal processor means to output (e.g. 3) cartesian coordinates of the transmitter. Said signal processor means may be embodied accordingly.

When said detector comprises said at least one modulating diffraction grating, and means of sensing the output power of that grating (e.g. photo-multiplier means) with two signals in quadrature, then the measured change in hyperboloidal coordinate of a point source transmitter is relative, i.e. measured from a known reference point. From the reference point and the measured change, the absolute position may be derived by said signal processor means to give one absolute hyperboloidal coordinate of the transmitter. If there is a plurality of said interferometers (e.g. 3 said interferometers) suitably disposed, each with one said sensor, then a corresponding plural number (e.g. 3) of hyperboloidal coordinates of a said transmitter may be determined and processed by said signal processor means to output (e.g. 3) cartesian coordinates of the transmitter. Said signal processor means may be embodied accordingly.

One preferred aspect of the invention is when two coordinates are enabled by two said radiation processor means and two said detector means, so as to determine the orientation of a line in 3-space, the line being normal to the incident parallel plane wavefronts.

When said at least one processor diffraction grating (which may be regarded as a multiplicity of slits) processes incident plane waves (the waves being in a collimated beam), the output of said at least one processor diffraction grating may vary with the cosine of the angle between the beam direction and a particular line(s) on the incident surface(s) of said at least one processor diffraction grating. Two said radiation processor means suitably disposed and irradiation from the same said transmitter may enable determination of the angles between planar wavefronts and two other planes. This will give the orientation of the normal(s) to the wavefronts, i.e. the direction of a line.

Another preferred aspect of the invention is when three coordinates are enabled by three said radiation processor means and three said detector means, so as to determine the position of a point in 3-space. Each of those coordinates selects a surface which is a hyperboloid of revolution. The intersections of two of those surfaces (i.e. the intersection of the hyperboloids identified by two coordinates) is a curve. One intersection of this curve with a third hyperboloid (identified by the third coordinate) is the point in 3-D space at which the point source transmitter is situated.

The present invention can be applied to any suitable application. One application is in industrial coordinate measurement, e.g. inspection of dimension(s) of manufactured parts. Another application enables rapid accurate measurements of change in location of at least one said transmitter and corresponding information about the location of substrate(s) supporting said transmitter(s). The substrate(s) may be constituted in any suitable manner.

The present invention may enable the provision of kinematic data for various purposes, e.g. control and/or reference purposes. For example, data may be used in measuring or controlling performance of industrial robots, for instance measurement may be made of dynamic response of the robots when executing commands, optionally in a series of commands. Data may provide information about, or for, control strategies, inertial loads, trajectories; or vibrations of robots e.g. industrial robots. In some applications of the invention to industrial robots, the invention may enable:

1. comparison between measured trajectory of a portion of a robot, and the trajectory predicted by a computer simulation of the dynamics, kinematics and control system;

2. comparison between points on measured trajectory of a portion of a robot, and the corresponding data from robot position sensors.

With suitable computer software, the true kinematic model of a robot may be generated, and compared with designed values, used in a dynamic simulation, or incorporated in a robot controller's internal kinematic model. Thus, a precise dynamic system may be provided e.g. to supply information about performance of an industrial robot, which information may be used e.g. for direct comparison between robots; as part of a design loop in improving dynamics and control; and in speeding collection of kinematic data for calibration purposes.

In general, in utilising the present invention, there may be used at least one apparatus of the second aspect of the invention. Said apparatus may comprise at least one said radiation processor means and at least one said detector means, and optionally at least one said signal processor means.

The present invention will now be illustrated by example, with reference to the accompanying drawings:

1. Figure 1 shows the interferometer in a configuration to measure changes in angle.

2. Figure 2 shows the interferometer in a configuration to measure changes in angle.

3. Figure 3 shows the interferometer in a configuration to measure changes in the position of a point.

4. Figure 4 shows the interferometer in a configuration to measure the position of a point.

The Examples below are non-limiting examples of how the invention may be employed. The Examples given do not constitute the only way in which the invention may be employed for the particular purposes stated.

## EXAMPLE 1 - ANGLE MEASUREMENT

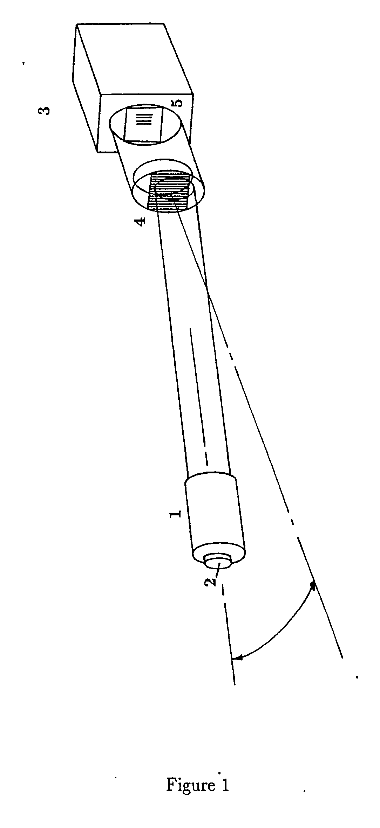

In this Example, (Figure 1), the interferometer, in a form which measures angular change, is used in a situation in which a precise angular measurement of small changes in orientation of a distant object is required. The transmitter 1 comprises a source 2 of coherent laser light, with accessories provided to produce a collimated beam. The essentially plane wavefronts of this beam are incident on a receiver 3 situated in the stationary part of the system. At the front of receiver 3 is a linear amplitude transmission diffraction grating 4. Coherent light passing through each line of grating 4 is diffracted by the grating and the resulting diffraction patterns interfere to produce an interference pattern consisting of essentially parallel straight lines. This interference pattern is incident on the image surface of a photosensitive device 5, e.g. a video camera. Movement of the interference pattern on this surface is detected by subsequent electronics, and e.g. monitored, processed, and recorded, or used as input to a servo system which controls the angular position of the transmitter. The pattern may also be viewed on a video monitor screen.

As long as transmitter 1 remains stationary relative to receiver 3, the interference patterns remain stationary on the surface of photosensitive device 5. In this circumstance, the pattern viewed on a video monitor screen also remains stationary. As the transmitter rotates, about an axis parallel to the grating lines, the incident angle of rays on the processor diffraction grating 4 changes, introducing a change in the relative phase between pairs of adjacent diffraction patterns emerging from that grating. This, in turn causes the interference pattern on the photosensitive surface of the photosensitive device 5 to move, in a direction normal to the direction of the processor grating lines. This movement of the interference pattern on the photosensitive surface is monitored on a video screen or by the detection electronics and, from the measured movement of the pattern, the change in angle of the incident radiation can be calculated.

## EXAMPLE 2 - ANGLE MEASUREMENT

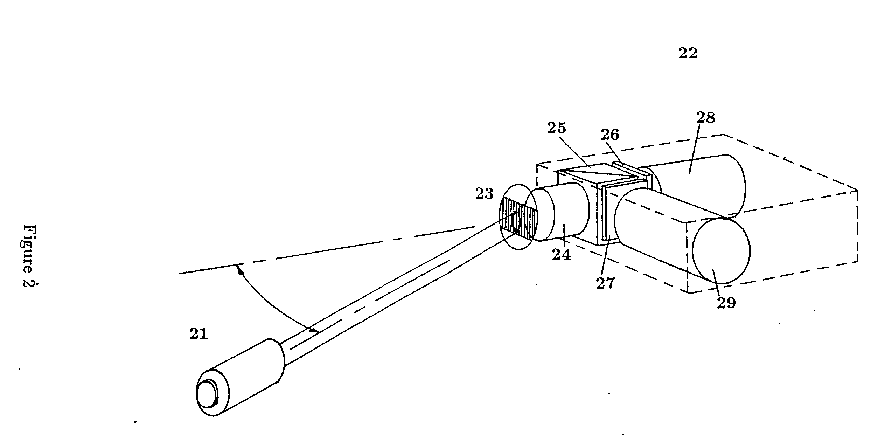

In this Example, (Figure 2), the interferometer, in a form which measures angular change, is used in a situation in which a precise angular measurement of small changes in orientation of a distant object is required. In this case, a lens is used as part of the receiver. Transmitter 21 comprises a source of coherent laser light, with accessories to produce a collimated beam. The essentially plane wavefronts of this beam are incident on receiver 22 situated in the stationary part of the system. At the front of receiver 22 is a linear amplitude transmission diffraction grating 23. Coherent light passing through the grating 23 is diffracted by the grating, and the resulting diffracted rays are superimposed or partially superimposed on the focal planes of a lens 24, downstream of an amplitude beam splitter 25. On each focal plane, an interference pattern is produced, this pattern consisting of essentially parallel straight lines. At said focal planes, are situated two amplitude transmission diffraction gratings 26, 27, with the same line spacing as the interference pattern and with lines essentially parallel to those of the interference pattern. These gratings 26, 27, are arranged in quadrature, that is, e.g. with the interference pattern and diffraction grating lines in phase on one grating, the relative positions of interference pattern and grating lines are simultaneously 90° relatively out of phase on the other grating. Downstream of each grating 26, 27, is a respective photodetector 28, 29, each of which senses the power transmitted therethrough. The output signals from photodetectors 28, 29, are monitored, processed, and recorded or used as input to a servo system (not shown) which controls the angular position of the transmitter.

As long as transmitter 21 remains stationary relative to receiver 22, the interference patterns remain stationary on the modulating diffraction gratings 26 or 27. In this circumstance, the power transmitted through each grating and detected by the photodetectors 28, 29 is constant, (dependent on the constant power from the processor grating 23). As the transmitter 21 rotates, about an axis parallel to the grating lines, the incident angle of rays on the processor diffraction grating 23 changes, introducing a change in the relative phase between pairs of lines on the processor grating. This in turn causes the interference patterns on the focal surfaces to move, in a direction normal to the direction of the grating lines on these planes. This movement of the interference pattern on the modulating grating 26 or 27 causes the light transmitted through that grating to vary cyclically with the relative phase of pattern and that grating. By processing the photodetector output signals, and electronically counting the number of cycles and parts of a cycle which have occurred, the change in angle of the incident radiation can be calculated.

## EXAMPLE 3 - POINT POSITION MEASUREMENT

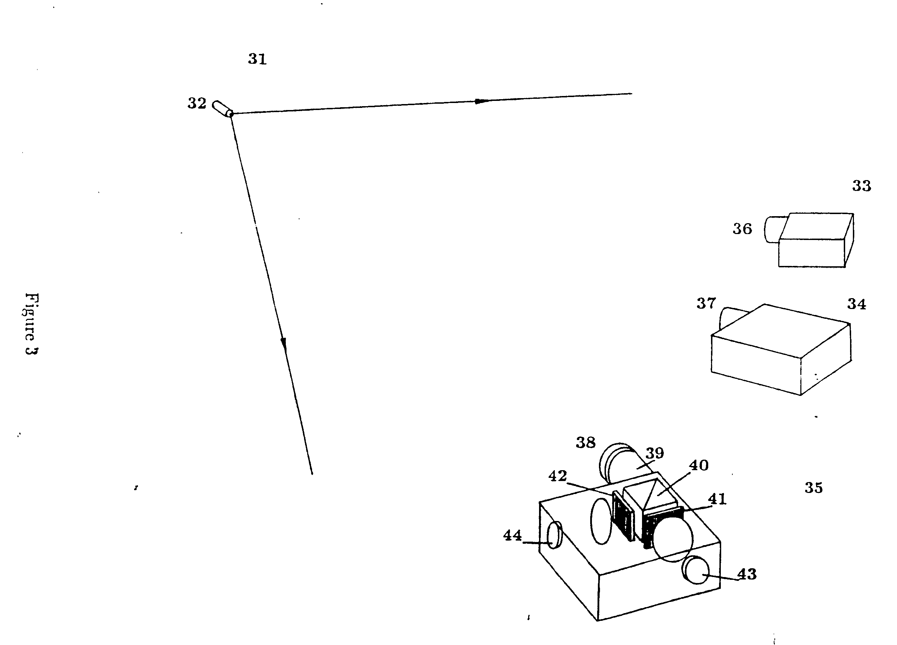

In this Example, (Figure 3), the interferometer is in a configuration to measure the position of a point within a working volume. Transmitter 31 comprises a source 32 of coherent laser light, with accessories to produce a beam which diverges from a point. The essentially spherical wavefronts of this beam are incident on three receivers 33, 34, 35, situated in the stationary part of the system. At the front of each receiver is a respective screen 36, 37, 38, with two essentially parallel slits (not shown). Coherent light passing through the slits is diffracted by the slits, and the resulting diffraction patterns are superimposed or partially superimposed on the focal planes (not shown) of a lens 39, downstream of an amplitude beam splitter 40. On each focal plane, an interference pattern is produced, this pattern consisting of essentially parallel straight lines. At said focal planes, are situated respective two amplitude transmission diffraction gratings 41, 42, with the same line spacing as the interference pattern and with lines essentially parallel to those of the interference pattern. The two gratings 41, 42, are arranged in quadrature, that is e.g. with the interference pattern and diffraction grating lines in phase on one grating, and the relative positions of interference pattern and grating lines simultaneously 90° relatively out of phase on the other grating. Downstream of grating 41 or 42 is a respective photodetector 43, 44, each of which senses the power transmitted through the respective grating 41, 42. The output signals from these photodetectors are monitored, processed, and recorded, or used as input to a servo system (not shown) which controls the position of the transmitter.

As long as transmitter 31 remains stationary relative to receivers 33, 34, 35, the interference patterns remain stationary on the modulating diffraction gratings 41, 42. In this circumstance, the power transmitted through each grating 41, 42, and detected by the photodetectors is constant. As transmitter 31 moves in translation in its working volume, then at each receiver 33, 34, 35, the difference in distance from the point source transmitter 31 to each of the slit centres on that receiver changes. This introduces a change in the phase of the interference pattern lines which lie on the modulating gratings 41, 42. As in Example 2, the interference patterns on the focal surfaces move, in a direction which is dependent on the motion of transmitter 31. This movement of the interference pattern on the modulating grating 41 or 42 causes the light transmitted through that grating to vary cyclically with the relative phase of pattern and grating. By processing the photodetector output signals, and electronically counting the number of cycles or parts of a cycle which have occurred at both modulating gratings in each receiver, the change in position of the interference patterns on the gratings can be monitored, and from this, the change in position of the transmitter of radiation can be calculated. The use of two interference patterns and two modulating gratings with output signals in quadrature allows changes in direction of the interference pattern movement to be taken into account.

## EXAMPLE 4 - POINT POSITION MEASUREMENT

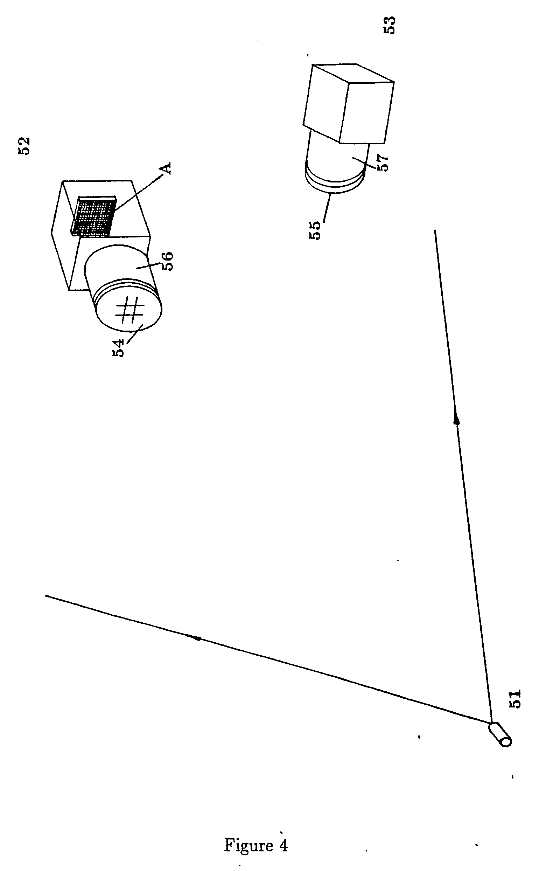

In this Example, (Figure 4), the interferometer is in a configuration to measure the position of a point within a working volume. In this Example, the interference pattern movement is monitored not with modulating diffraction gratings and photodetectors which measure the power transmitted through these gratings, but with a two dimensional array A of light sensitive elements - e.g. a charge coupled device (CCD) - positioned on the focal plane of a lens. In this Example, the interferometer gives the position of a point source (after calculation), not just the change in position from a known starting position of the transmitter. Transmitter 51 comprises a source of coherent laser light, with accessories to produce a beam which diverges from a point. The essentially spherical wavefronts of this beam are incident on at least two receivers 52, 53, situated in the stationary part of the system. At the front of each receiver is a screen 54, 55, with four slits. Coherent light passing through the slits is diffracted by the slits, and the resulting diffraction patterns are superimposed or partially superimposed on the focal plane of a lens 56, 57. On the focal plane, an interference pattern is produced. This pattern lies on the two dimensional array A of light sensitive elements, which are monitored electronically to determine the position of the interference pattern on the array.

As long as transmitter 51 remains stationary relative to the receivers, the interference patterns remain stationary on the light sensitive array A. In this circumstance, the electronics downstream of the array detect no change in the position of the irradiance pattern incident on the array e.g. of pixels. As transmitter 51 moves in translation in its working volume, then at each receiver, the difference in distance from the point source transmitter 51 to each of the slit centres on that receiver changes. This introduces change in the phase of the interference pattern which lies on the light sensitive array A in each receiver. As in Example 3, the interference patterns on the focal surface of each receiver move in a direction which is dependent on the motion of transmitter 51. This movement of the interference pattern on each light sensitive array is detected by the electronics connected to the array A, as e.g. different sets of pixels are illuminated by the moving pattern. At desired intervals, the monitored position of the interference pattern on the arrays A of the receivers can be used to calculate the position of the transmitter point source in the working volume.

## Claims

1. A method of detecting change in location of at least one portion of a transmitter of electromagnetic radiation, characterised by said method comprises:
processing said radiation so as to give at least one interference pattern; and
detecting motion of said at least one interference pattern, said detecting being at at least one surface, and for enabling motion of said at least one interference pattern to determine at least one coordinate and/or change in at least one coordinate of said transmitter.

2. A method as claimed in claim 1, wherein said transmitter comprises at least one source of radiation for constituting suitable wavefronts.

3. A method as claimed in claim 2, wherein said at least one source of radiation comprises at least one laser.

4. A method as claimed in any one of claims 1 to 3, wherein said method comprises utilising separate from or part of said transmitter at least one accessory chosen from: filter means, objective lens means, spatial filter means, and collimating lens means.

5. A method as claimed in any one of claims 1 to 4, wherein said processing of said radiation comprises utilising at least one processor diffraction grating for enabling diffraction patterns for constituting said at least one interference pattern.

6. A method as claimed in any one of claims 1 to 4, wherein said processing of said radiation comprises utilising at least one screen means comprising apertures for enabling diffraction patterns for constituting said at least one interference pattern.

7. A method as claimed in claim 5 or 6, wherein said method comprises at least one accessory for dealing with radiation to be inputted to or outputted from said at least one processor diffraction grating and/or said at least one processor screen means.

8. A method as claimed in claim 7, wherein said method comprises utilising at least one amplitude beam splitter means for beam splitting said outputted radiation from said at least one processor diffraction grating and/or from said at least one processor screen means.

9. A method as claimed in any one of claims 5 to 8, wherein said processing of said radiation comprises utilising at least one modulating diffraction grating
or
at least one array of elements sensitive to said radiation.

10. A method as claimed in any one of claims 5 to 8, wherein said detecting comprises utilising at least one modulating diffraction grating
or
at least one array of elements sensitive to said radiation.

11. A method as claimed in claim 9 or 10, wherein two said modulating diffraction gratings are utilised in providing quadrature of radiation.

12. A method as claimed in any one of claims 1 to 11, wherein said detecting comprises at least one sensor for sensing position of at least one said interference pattern so as to provide at least one output signal processable by at least one signal processor means.

13. A method as claimed in claim 12, wherein said method comprises utilising said at least one signal processor means to provide at least one output for determining at least one coordinate of said transmitter.

14. A method as claimed in any one of claims 1 to 13, wherein said method enables determination of orientation of a line in 3-space.

15. A method as claimed in any one of claims 1 to 14, wherein said method enables determination of direction of a line.

16. A method as claimed in any one of claims 1 to 15, wherein said method enables determination of position of a point.

17. Apparatus adapted for carrying out a method as claimed in any one of claims 1 to 16, characterised by at least one radiation processor means for processing said radiation so as to give said at least one interference pattern (3,4); and
at least one detector means for detecting said motion and determination of at least one coordinate and/or change in at least one coordinate (5).

18. Apparatus as claimed in claim 17, characterised by at least one said transmitter of radiation (1,2).

19. A robotic apparatus, device or system, for a method as claimed in any one of claims 1 to 16 or comprising at least one apparatus as claimed in claim 17 or 18.

Figure 1

EP 0 331 353 A2

Figure 2

Figure 3

Figure 4